# EUROPEAN PATENT APPLICATION

(11) **EP 4 708 821 A1**
(43) Date of publication of application: **11.03.2026**
(21) Application number: 24830739.9
(22) Date of filing: 25.06.2024
(51) Int. Cl.: H04L 67/1095

(54) **DATA PROCESSING METHOD, SWITCHING NODE, AND RELATED SYSTEM**

(30) Priority: 27.06.2023 CN 202310776855; 14.08.2023 CN 202311023938
(71) Applicant: Huawei Technologies Co., Ltd., Shenzhen, Guangdong 518129 (CN)
(72) Inventor: XIE, Shanggang, Shenzhen, Guangdong 518129 (CN); CHEN, Tianxiang, Shenzhen, Guangdong 518129 (CN); LING, Wenkai, Shenzhen, Guangdong 518129 (CN); XU, Jie, Shenzhen, Guangdong 518129 (CN); LIU, Shuo, Shenzhen, Guangdong 518129 (CN); SHEN, Shengyu, Shenzhen, Guangdong 518129 (CN)
(74) Representative: Gill Jennings & Every LLP
(86) International application number: PCT/CN2024/101219
(87) International publication number: WO 2025/002098

(57) **Abstract**

This application provides a data processing method, a switch node, and a related system, and is applied to a distributed computing system including a plurality of computing nodes and at least one first switch node. Each first switch node is connected to at least one computing node in the plurality of computing nodes. After receiving control information of the at least one computing node connected to the first switch node, the first switch node sends a data read request to the at least one computing node based on the control information. After obtaining a computation result obtained by computing data read based on the data read request, the first switch node sends the computation result to the at least one computing node. In the distributed computing system, when the plurality of computing nodes need to perform collective communication, a switch node obtains, from the computing nodes, data that needs to be aggregated, performs data aggregation, and then sends an aggregation result to the computing nodes, to reduce an amount of data that needs to be communicated and a quantity of times of synchronization that is performed when the data aggregation is performed through collective communication, thereby improving computing efficiency.

## Description

This application claims priorities to Chinese Patent Application No. "202310776855.2", filed with the China National Intellectual Property Administration on June 27, 2023, and entitled "AGGREGATION COMPUTING SYSTEM", and to Application No. "202311023938.0", filed with the China National Intellectual Property Administration on August 14, 2023, and entitled "DATA PROCESSING METHOD, SWITCH NODE, AND RELATED SYSTEM", both of which are incorporated herein by reference in their entireties.

### TECHNICAL FIELD

This application relates to the field of computer technologies, and in particular, to a data processing method, a switch node, and a related system.

### BACKGROUND

With development of high performance computing (High Performance Computing, HPC) and artificial intelligence (Artificial Intelligence, AI) technologies, many large-scale applications emerge, and a scale of data that needs to be processed continuously increases. To resolve a problem of computing large-scale data, distributed computing emerges. In the distributed computing, data is exchanged between computing nodes. Collective communication (collective communication) is widely and significantly applied in the distributed computing. For example, a collective communication method like allreduce (Allreduce) or allgather (allgather) is a common method for implementing data exchange between a plurality of computing nodes in the distributed computing. However, a current collective communication method has problems such as a large amount of data to be communicated and a large quantity of times of data synchronization, affecting distributed computing efficiency.

### SUMMARY

This application provides a data processing method, a switch node, and a related system, to reduce an amount of data that needs to be communicated and a quantity of times of synchronization that is performed when a distributed computing system performs data aggregation through collective communication, thereby improving computing efficiency of distributed computing.

According to a first aspect, this application provides a data processing method, applied to a distributed computing system including a plurality of computing nodes and at least one first switch node. Each first switch node in the at least one first switch node is connected to at least one computing node in the plurality of computing nodes. For any first switch node, after the first switch node receives first control information sent by at least one computing node connected to the first switch node, the first switch node sends a data read request to the at least one computing node connected to the first switch node, obtains a data computation result based on the data read request, and then sends the obtained data computation result to the at least one computing node connected to the first switch node. The first control information includes a communication job identity (Identity, ID), and the communication job ID indicates a communication job that the at least one computing node participates in.

In the distributed computing system, in a process of performing distributed computing by the plurality of computing nodes, when collective communication needs to be performed, a computing node sends control information to a switch node, and the switch node that receives the control information actively obtains, from the computing node, data that needs to be aggregated, performs data aggregation in the switch node, and then sends an aggregation result to the computing node, to reduce an amount of data that needs to be communicated and a quantity of times of synchronization that is performed when the distributed computing system performs data aggregation through collective communication, thereby improving computing efficiency of the distributed computing.

In addition, in the foregoing distributed computing process, the switch node sends a data read request only after the computing node sends the control information to the switch node. The switch node obtains the data that needs to be aggregated, performs data aggregation on the switch node, and after the data aggregation is completed, sends the result of the data aggregation to the node that sends the control information. Before and after the process, the switch node can be configured to process another job. In other words, an aggregation job triggered by the control information does not continuously occupy a computing resource of the switch node for a long time without releasing the computing resource. To be specific, for a service, the service occupies a resource of a switch node for data aggregation only when collective communication needs to be performed, and does not occupy the resource of the switch node in a process of performing the service by a computing node. Therefore, according to the data processing method provided in this application, when the distributed computing system performs a plurality of services, the resource of the switch node can be fully used.

In a possible implementation, the distributed computing system further includes at least one second switch node, and each second switch node in the at least one second switch node is connected to some first switch nodes in the at least one first switch node. For a second switch node connected to the first switch node that receives the first control information, that the first switch node sends the data read request to the at least one computing node based on the first control information includes: The first switch node sends second control information to the second switch node based on the first control information. The first switch node sends the data read request to the at least one computing node connected to the first switch node, only after receiving notification information sent by the second switch node. Both the second control information and the notification information include the communication job ID, and the notification information indicates the first switch node to obtain data from the at least one computing node connected to the first switch node.

When the distributed computing system includes the at least one second switch node, the data read by the first switch node based on the data read request further needs to be sent to the second switch node connected to the first switch node for processing. Therefore, the first switch node further needs to send the second control information obtained based on the first control information to the second switch node. After the second switch node sends the notification information to the first switch node, it indicates that the first switch node and the second switch node can process the data, and then the first switch node obtains the data from the computing node, avoiding a problem that when the second switch node is unavailable, the read data cannot be processed, resulting in a waste of bandwidth or a computation error.

In a possible implementation, when the distributed computing system includes the second switch node, after the first switch node sends the data read request to the at least one computing node connected to the first switch node, the first switch node reads the data from the at least one computing node based on the data read request, and performs computation on the read data to obtain a first computation result. Another first switch node in the distributed computing system also performs a same operation to obtain a first computation result, and the plurality of first switch nodes send, to the second switch node, first computation results obtained by computation. The second switch node obtains the foregoing data computation result by computation based on the first computation results, and the first switch node obtains the foregoing data computation result from the second switch node.

Because a computing resource and storage resource of a switch node are limited, in a distributed computing node including a plurality of layers of switch nodes, each layer of switch node performs a corresponding computing operation based on obtained data, so that aggregation computation for a large amount of data can be implemented by using a plurality of switch nodes, thereby improving efficiency of implementing data aggregation on the switch node.

In a possible implementation, the communication job is Allreduce, and the data computation result is a summation result, an average result, or an extreme value result of the data obtained based on the data read request.

In a possible implementation, the first control information further includes address information, and the address information indicates a location of data read by the first switch node from the computing node that sends the first control information; and the data read based on the data read request is a part or all of the data read as indicated by the first control information.

The data read request needs to include the location of the data to be read. Therefore, the first control information further includes the address information. When generating the data read request, the first switch node needs to determine, based on the address information, the location of the data to be read. A size of a valid payload carried in a data packet is limited, or a valid payload of a data packet that can be received by a node receiving the data packet is limited. However, in the distributed computing system, an amount of data that needs to participate in collective communication in each computing node is large. Therefore, data read based on a data read request is generally only a part of data read as indicated by the foregoing address information. The first switch node or the second switch node needs to determine, based on the location in the address information, an address of data read based on each data read request in a plurality of generated data read requests.

In a possible implementation, the first control information further includes computing node information, and the computing node information indicates a quantity of the at least one computing node connected to the first switch node. After determining, based on the computing node information, that the first control information sent by the computing node connected to the first switch node is received, the first switch node sends the data read request to the computing node based on the first control information. The at least one computing node connected to the first switch node actually represents a computing node that is connected to the first switch node and that participates in performing the current service, and the communication job is a job that needs to be performed in the current service. Because a storage resource of the switch node is limited, the first switch node sends the data read request to the computing node only after determining that the control information sent by all the computing nodes connected to the first switch node is received. This can avoid a problem that data that is read first is buffered for a long time because the first switch node reads the data when receiving one piece of first control information.

The computing node may be a graphics processing unit (Graphics Processing Unit, GPU), a neural network processing unit (Neural network Processing Unit, NPU), a tensor processing unit (Tensor Processing Unit, TPU), a dedicated AI processing chip, or the like. The switch node may be a switching chip or a switching device having a switching function.

In a possible implementation, the distributed computing system further includes a host. The host generates operator information based on topology information of the distributed computing system and a to-be-executed service. The operator information includes a communication operator and a computing operator in the to-be-executed service.

In a possible implementation, the method further includes: The host determines, based on the topology information, that a quantity of first switch nodes connected to each computing node is N, divides each communication operator into N communication jobs, where each first switch node corresponds to one of the N communication jobs, and delivers the communication operator and the N communication jobs to the plurality of computing nodes. N is a positive integer. It should be understood that each communication operator may also be divided into m*N communication jobs. m is a positive integer, and each first switch node corresponds to m communication jobs, or each first switch node corresponds to at least one communication job. The communication operator is an operator for performing data aggregation. Executing the operator can implement that a switch node obtains data from a computing node and performs data aggregation. The communication operator is divided into the N communication jobs. Each communication job is essentially that one switch node obtains a part of data in one computing node, each computing node is connected to a plurality of first switch nodes, and each first switch node is configured to process a part of data in the connected computing node, so that an amount of data that needs to be processed by each switch node can be reduced, and resources of the switch nodes in the distributed computing system are fully utilized, thereby improving efficiency of data processing in the distributed computing system.

According to a second aspect, this application provides a switch node. The switch node includes a communication control module and a processing module, and is used in a distributed computing system. The distributed computing system includes a plurality of computing nodes and at least one switch node, and each switch node in the at least one first switch node is connected to at least one computing node in the plurality of computing nodes.

The communication control module is configured to receive first control information sent by at least one computing node connected to the switch node. The first control information includes a communication job identity ID, and the communication job ID indicates a communication job that the at least one computing node participates in. The processing module is configured to generate a data read request based on the first control information. The communication control module is further configured to send the data read request to the at least one computing node connected to the switch node. The processing module is further configured to obtain a data computation result, where the data computation result is obtained based on data read based on the data read request. The communication control module is further configured to send the data computation result to the at least one computing node connected to the switch node.

In a possible implementation, the distributed computing system further includes a second switch node, and the second switch node is connected to the first switch node. The processing module is further configured to generate second control information based on the first control information, where the second control information includes the communication job ID. The communication control module is further configured to send the second control information to the second switch node. The processing module is specifically configured to: after receiving notification information sent by the second switch node, generate the data read request based on the first control information, where the notification information includes the communication job ID, and the notification information indicates the first switch node to obtain data from the at least one computing node connected to the first switch node.

In a possible implementation, the processing module is further configured to perform computation on the data read from the at least one computing node, to obtain a first computation result. The communication control module is further configured to: send the first computation result to the second switch node, and receive the data computation result computed by the second switch node, where the data computation result is a collective computation result obtained by the second switch node based on the first computation result and a first computation result that is sent by another switch node in the at least one switch node.

In a possible implementation, the communication job is Allreduce, and the data computation result is a summation result, an average result, or an extreme value result of the data obtained based on the data read request.

In a possible implementation, the first control information further includes address information, and the address information indicates a location of data read by the first switch node from the computing node that sends the first control information; and the data read based on the data read request is a part or all of the data read as indicated by the first control information.

In a possible implementation, the first control information further includes computing node information, and the computing node information indicates a quantity of at least one computing node connected to the first switch node. The processing module is further configured to generate the data read request after determining, based on the computing node information, that the first control information of the at least one computing node is received.

In a possible implementation, the computing node is a GPU, an NPU, a TPU, or a dedicated AI processing chip, and the switch node is a switching chip or a switching device having a switching function.

In a possible implementation, the communication control module and the processing module are logic circuits in the switch node. An internal micro-architecture of the processing module may be implemented as a ring-shaped architecture, a dual-ring architecture, a single central control architecture, or a plurality of distributed central unit architectures.

According to a third aspect, this application provides a distributed computing system. The distributed computing system includes a plurality of computing nodes and at least one first switch node. Each first switch node in the at least one first switch node is connected to at least one computing node in the plurality of computing nodes. Each computing node is configured to send first control information to a first switch node connected to the computing node, and each first switch node is configured to perform an operation implemented by the first switch node in any one of the first aspect or the possible implementations of the first aspect.

In a possible implementation, the distributed computing system further includes a host, and the host is configured to perform an operation implemented by the host in any one of the first aspect or the possible implementations of the first aspect.

According to a fourth aspect, this application provides a computer-readable storage medium. The computer-readable storage medium stores instructions, and when the instructions are run on a computing device, the computing device is enabled to perform the method according to any one of the first aspect or the possible implementations of the first aspect.

According to a fifth aspect, this application provides a computer-readable storage medium. The computer-readable storage medium stores instructions, and when the instructions are run on a switch node, a computing device is enabled to perform the method according to any one of the second aspect or the possible implementations of the second aspect.

According to a sixth aspect, this application provides a computer program product. When the computer program product runs on a computing device, the computing device is enabled to perform the method implemented by the first switch node in any one of the first aspect or the possible implementations of the first aspect.

According to a seventh aspect, this application provides a computer program product. When the computer program product runs on a device, the device is enabled to perform the method implemented by the host in any one of the first aspect or the possible implementations of the first aspect.

### BRIEF DESCRIPTION OF DRAWINGS

To describe the technical solutions in embodiments of the present invention or in the background more clearly, the following briefly describes the accompanying drawings needed for use in embodiments of the present invention or the background.
FIG. 1 is a diagram of a computing device cluster according to an embodiment of this application;
FIG. 2 is a diagram of a distributed computing system according to an embodiment of this application;
FIG. 3 is a diagram of another distributed computing system according to an embodiment of this application;
FIG. 4 is a diagram of data division in a computing node according to an embodiment of this application;
FIG. 5 is a diagram of interaction of a data processing method according to an embodiment of this application;
FIG. 6 is a diagram of generating job information by a host according to an embodiment of this application;
FIG. 7 is a diagram of network initialization according to an embodiment of this application;
FIG. 8 is a diagram of interaction of another data processing method according to an embodiment of this application;
FIG. 9 is a diagram of a switch node according to an embodiment of this application;
FIG. 10 is a diagram of a host according to an embodiment of this application; and
FIG. 11 is a diagram of a computing device according to an embodiment of this application.

### DESCRIPTION OF EMBODIMENTS

With development of high performance computing (High Performance Computing, HPC) and artificial intelligence (Artificial Intelligence, AI) technologies, many large-scale applications emerge, such as AI model training. A scale of data that needs to be processed by a large-scale application is also increasing. To resolve a computing problem of large-scale data, distributed computing emerges. In the distributed computing, a plurality of computing nodes process data, and then the plurality of computing nodes exchange the data to finally complete computing. Collective communication (for example, Allreduce or Allgather) is a common method for implementing data exchange between the plurality of computing nodes in the distributed computing, and is widely and significantly applied in the distributed computing.

For example, in AI model training, when a data scale of a training set is large, a plurality of computing nodes can perform model training in a data parallel manner, each computing node includes a complete AI model that needs to be trained, data in the training set is divided into a plurality of subsets, and one computing node trains the model based on one of the subsets. In a process of performing model training by the plurality of computing nodes, after backpropagation of each iteration, Allreduce needs to be performed on gradient data obtained by each computing node, to ensure that model parameters of models on the computing nodes are consistent with those in a next iteration.

However, in current collective communication, there are problems such as a large amount of data to be communicated and a large quantity of times of data synchronization. For example, when Allreduce is implemented in a ring-Allreduce manner or a halving-doubling (halving-doubling) Allreduce manner, an amount of data actually communicated between a plurality of computing nodes is twice that of original data. Therefore, the collective communication method used in the current distributed computing affects efficiency of the distributed computing.

This application provides a distributed computing system and a data processing method applied to the distributed computing system. The distributed computing system includes a plurality of computing nodes and at least one first switch node, and each first switch node is connected to at least one computing node in the plurality of computing nodes. In the distributed computing system, in a process of performing distributed computing by the plurality of computing nodes, when collective communication needs to be performed, data aggregation can be implemented in a switch node, and then a result obtained through data aggregation is sent to a computing node, to reduce an amount of data that needs to be communicated and a quantity of times of data synchronization performed when the distributed computing system performs data aggregation through collective communication, thereby improving computing efficiency of the distributed computing.

The following describes in detail the distributed computing system provided in embodiments of this application with reference to the accompanying drawings.

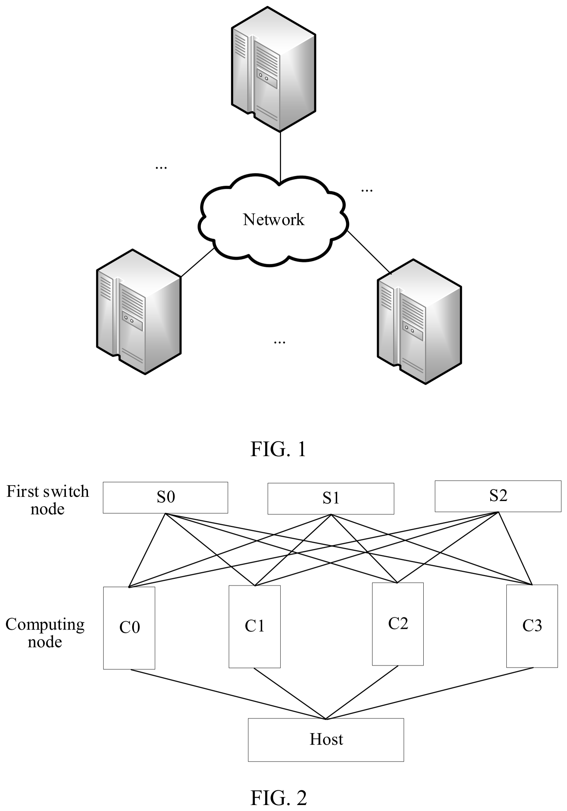

This application provides a computing device cluster. FIG. 1 is a diagram of a computing device cluster according to an embodiment of this application. The computing device cluster includes one or more computing devices. When the computing device cluster includes a plurality of computing devices, the plurality of computing devices are connected to each other via a network. The network may be an operator network, or may be a network including an optical cable and a data transmission device. This is not specifically limited in embodiments of this application.

The computing device cluster may form a distributed computing system, and each computing device in the cluster may alternatively be independently used as a distributed computing system. FIG. 2 is a diagram of a distributed computing system according to an embodiment of this application. The distributed computing system includes a host (host), a plurality of computing nodes, and at least one first switch node (switch). The plurality of computing nodes are all connected to the host, each first switch node in the at least one first switch node is connected to at least one computing node in the plurality of computing nodes. As shown in FIG. 2, an example in which the distributed computing system includes four computing nodes (C0 to C3) and three first switch nodes (S0 to S2) is used in FIG. 2, and the four computing nodes and the three first switch nodes are connected in a fully-connected manner.

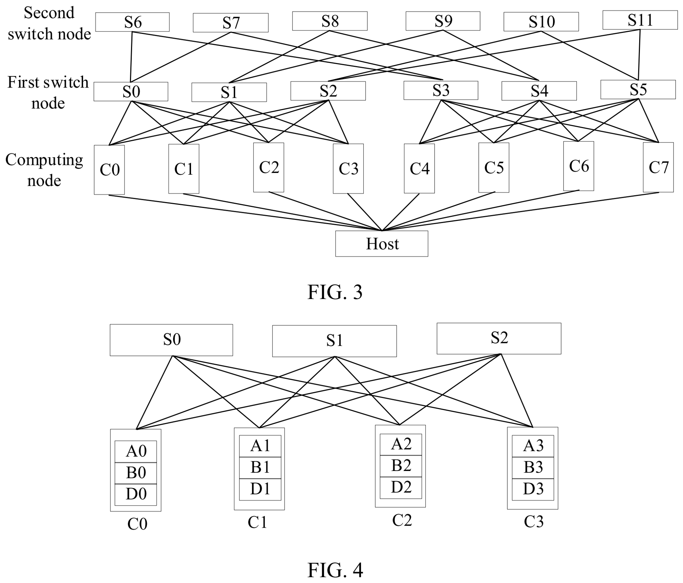

FIG. 3 is a diagram of another distributed computing system according to an embodiment of this application. The distributed computing system includes a host, a plurality of computing nodes, at least one first switch node, and at least one second switch node. The plurality of computing nodes are all connected to the host, each first switch node in the at least one first switch node is connected to at least one computing node in the plurality of computing nodes. Each second switch node in the at least one second switch node is connected to some first switch nodes in the at least one first switch node. As shown in FIG. 3, an example in which the distributed computing system includes eight computing nodes (C0 to C7), six first switch nodes (S0 to S5), and six second switch nodes (S6 to S11) is used in FIG. 3. For a connection relationship between the plurality of computing nodes and the at least one first switch node, and a connection relationship between the at least one first switch node and the at least one second switch node, refer to FIG. 3.

In embodiments of this application, the host may be a central processing unit (Central Processing Unit, CPU) of a computing device. The computing node may be a graphics processing unit (Graphics Processing Unit, GPU), a neural network processing unit (Neural network Processing Unit, NPU), a tensor processing unit (Tensor Processing Unit, TPU), a dedicated AI processing chip, or the like. The switch node may be a switching chip, or may be a switching device having a switching function, like a switch.

It should be understood that FIG. 2 and FIG. 3 show a logical connection relationship between the host, the computing node, and the switch node. The plurality of computing nodes may be computing nodes located in a same physical device, or may be computing nodes located in different physical devices. When the plurality of computing nodes are located in a plurality of different physical devices, the plurality of physical devices may be physical devices located in a same cabinet. For example, the computing nodes C0 to C3 shown in FIG. 3 are located in a same server, and the computing nodes C4 to C7 are located in another server. The two servers are located in a same cabinet and are connected through a switch node in the cabinet. When the plurality of computing nodes are computing nodes located in a same physical device, the switch node may be a switching chip in the physical device, or may be a switching device different from the physical device.

It should be understood that the foregoing descriptions with reference to FIG. 2 and FIG. 3 are merely examples of a topology structure of the distributed computing system provided in this application, and cannot be understood as a specific limitation. The distributed computing system may alternatively be of another topology structure. For example, the distributed computing system may alternatively include more or fewer computing nodes or switch nodes, or include more layers of switch nodes. The connection relationship between the computing node and the switch node and the connection relationship between the at least one first switch node and the at least one second switch node are merely used as an example, and cannot be understood as a specific limitation. There may be another connection relationship between the computing node and the switch node. This is not specifically limited in embodiments of this application.

In embodiments of this application, when a job needs to be executed by using the computing device cluster shown in FIG. 1 and the distributed computing system shown in FIG. 2 or FIG. 3, after obtaining a to-be-executed service of each computing device, a host of each computing device in the computing device cluster executes the respective corresponding to-be-executed service by using each computing node in the distributed computing system. For a distributed computing system in a computing device, in a process of executing a service by a plurality of computing nodes, if data aggregation needs to be performed, each computing node sends control information to a connected switch node. After the switch node receives the control information sent by the computing node, the switch node obtains, based on the control information, needed data from each computing node to perform data aggregation, and sends a result obtained through data aggregation to each computing node.

For example, if the job is an AI model training job, the to-be-executed service obtained by each computing device is model training performed in a data parallel manner. If the distributed computing system shown in FIG. 2 is used to perform model training in a data parallel manner, each computing node of the computing nodes C0 to C3 loads a same model, and different computing nodes train the model by using different training data. After each computing node completes backpropagation of one iteration, Allreduce needs to be performed on gradient data obtained by each computing node. Because each computing node in FIG. 2 is connected to the three first switch nodes S0 to S2, when Allreduce is performed, gradient data in each computing node may be divided into three pieces, and each first switch node obtains one piece of corresponding gradient data from one computing node, to perform gradient aggregation synchronously by using the three first switch nodes, so as to fully use resources of the first switch nodes to perform data aggregation, thereby improving computing efficiency of the distributed computing system. FIG. 4 is a diagram of data division in a computing node according to an embodiment of this application. Gradient data in a computing node C0 may be divided into three pieces of data: A0, B0, and D0. Gradient data in a computing node C1 may be divided into three pieces of data: A1, B1, and D1. Gradient data in a computing node C2 may be divided into three pieces of data: A2, B2, and D2. Gradient data in a computing node C3 may be divided into three pieces of data: A3, B3, and D3.

Each computing node sends control information to three first switch nodes connected to the computing node. Each piece of control information includes a communication job identity, each communication job identity indicates one communication job, and a communication job identity in control information sent by each computing node to a same first switch node is the same. After receiving control information, each first switch node obtains, based on the control information, data from a computing node that sends the control information. When receiving control information sent by the foregoing four computing nodes, one first switch node obtains corresponding gradient data from the four computing nodes, performs computation on the obtained gradient data to obtain a data computation result, and sends the data computation result to the computing nodes.

For example, after receiving control information of the computing node C0, a first switch node S0 sends one or more data read requests to the computing node C0, to obtain the data A0 from the computing node C0. S0 can obtain the data A1, the data A2, and the data A3 from the other computing nodes by using the same method. Then, aggregation computation is performed on the data A0, the data A1, the data A2, and the data A3, to obtain an aggregated data computation result A0123, and then the data computation result A0123 is sent to the computing nodes. Similarly, a switch node S1 can obtain the data B0, the data B1, the data B2, and the data B3 from the foregoing four computing nodes, to obtain a data computation result B0123 through computation; the switch node S2 can obtain the data D0, the data D1, the data D2, and the data D3 from the foregoing four computing nodes, to obtain a data computation result D0123 through computation; and then the obtained data computation results are sent to the corresponding computing nodes, so that gradient data in each computing node is finally the same.

Because a plurality of rounds of iterative training need to be performed on the model, gradient data in each computing node can be synchronized before a next iteration by using the foregoing method. After new gradient data is obtained by backpropagation of next iterative training, gradient data aggregation can be implemented again between the computing node and the switch node by using the foregoing method.

The foregoing describes the data processing method provided in this application by using an example in which the distributed computing system performs model training in the data parallel manner, and performs data aggregation on the gradient data obtained through model training backpropagation. It should be understood that the distributed computing system may be further configured to perform aggregation on other data that is in the data parallel, or may be used in another scenario in which data aggregation needs to be performed through collective communication, for example, a scenario in which model training is performed in a model parallel manner. Details are not described herein again.

It should be noted that, each time the distributed computing system executes a to-be-executed service, not all computing nodes in the distributed computing system necessarily participate in execution. For example, in the distributed computing system shown in FIG. 2, when one service is executed, only three computing nodes are used to participate in executing the service, and when another service is executed by using the distributed computing system, four computing nodes are used to participate in executing the service. When the data processing method provided in this application is described in this application, for ease of description, an example in which all computing nodes shown in the figure participate in execution is used for description.

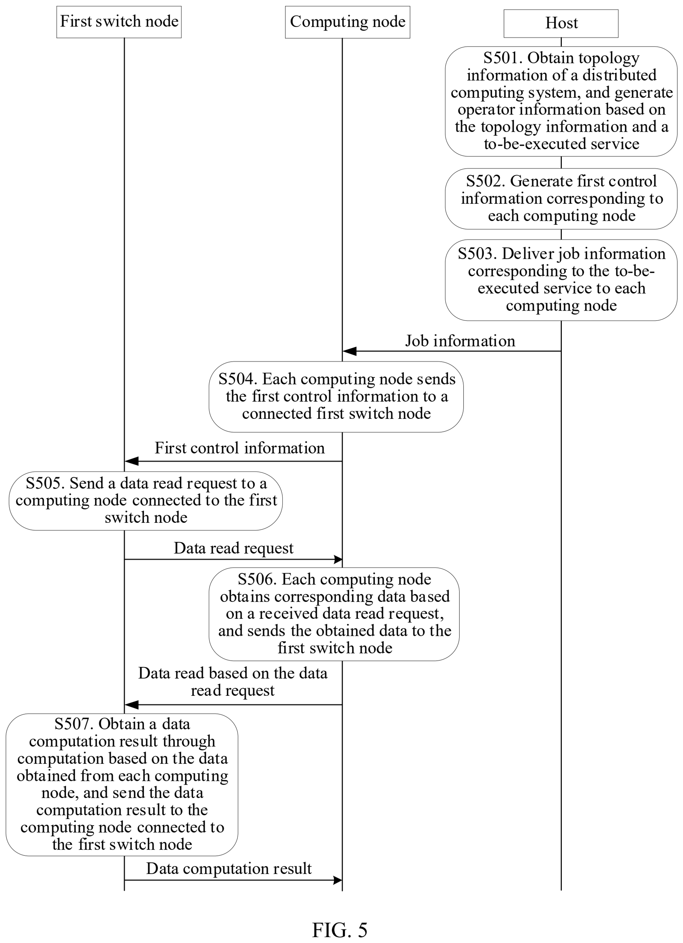

With reference to the foregoing distributed computing system and accompanying drawings, the following describes in detail a data processing method that is based on the foregoing distributed computing system. FIG. 5 is a diagram of interaction of a data processing method according to an embodiment of this application.

S501. A host obtains topology information of a distributed computing system, and generates operator information based on the topology information and a to-be-executed service.

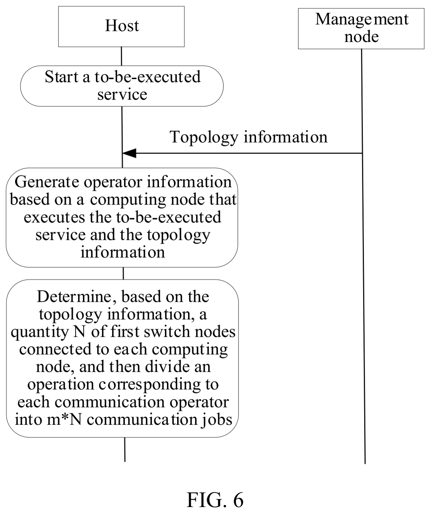

In this embodiment of this application, the distributed computing system shown in FIG. 2 is used as an example to describe the data processing method provided in this embodiment of this application. As shown in FIG. 6, after the distributed computing system starts a to-be-executed service, the host can obtain the topology information of the distributed computing system from a management node. The topology information includes a connection relationship between each computing node and each first switch node in the distributed system. Then, the host generates the operator information based on a computing node that executes the to-be-executed service and the topology information. The operator information includes information about a computing operator and a communication operator. When being executed, the computing operator is used to implement a computing operation in the to-be-executed service, and when being executed, the communication operator is used to implement a data sending or receiving operation between the computing node and another node.

In a process of executing the foregoing to-be-executed service by using the distributed computing system, collective communication between the computing nodes occurs. In other words, the communication operator is used to implement the collective communication between the computing nodes. In embodiments of this application, a switch node is used to implement the collective communication between the computing nodes. To fully utilize a resource of a first switch node connected to each computing node, in embodiments of this application, a plurality of first switch nodes connected to each computing node are used to implement an operation corresponding to one communication operator. Therefore, after obtaining the topology information, the host determines, based on the topology information, a quantity N of first switch nodes connected to each computing node, and then divides an operation corresponding to each communication operator into m*N communication jobs. Each first switch node corresponds to at least one of the m*N communication jobs, or each first switch node corresponds to m of the m*N communication jobs, and the operation corresponding to the communication operator is implemented by using the m*N communication jobs corresponding to the N first switch nodes, where m is a positive integer. In embodiments of this application, an example in which m is equal to 1 is used to describe the data processing method provided in this application. To be specific, the operation corresponding to each communication operator is divided into N communication jobs.

For example, the distributed computing system shown in FIG. 4 is used as an example. The to-be-executed service is to perform AI model training in a data parallel manner, and the AI model training is performed by using the four computing nodes in FIG. 4. After each computing node completes backpropagation of one iteration, Allreduce needs to be performed on gradient data obtained by each computing node, that is, a communication operator corresponding to Allreduce is executed. Because each computing node in FIG. 4 is connected to the three first switch nodes S0 to S2, an operation performed by a communication operator corresponding to Allreduce in each computing node may be divided into three communication jobs, that is, gradient data in each computing node is divided into three pieces. Each first switch node in the three first switch nodes obtains a corresponding piece of gradient data from one computing node. In other words, each first switch node corresponds to one of the three communication jobs. The three first switch nodes can obtain complete gradient data in one computing node. To be specific, the three communication jobs corresponding to the three first switch nodes implement the operation corresponding to the communication operator corresponding to Allreduce.

The communication operator is divided into the N communication jobs. Each communication job is essentially that one first switch node obtains a part of data in one computing node, each computing node is connected to a plurality of first switch nodes, and each first switch node is configured to process a part of data in the connected computing node, so that an amount of data that needs to be processed by each first switch node can be reduced, and resources of the switch nodes in the distributed computing system are fully utilized, thereby improving efficiency of data processing in the distributed computing system.

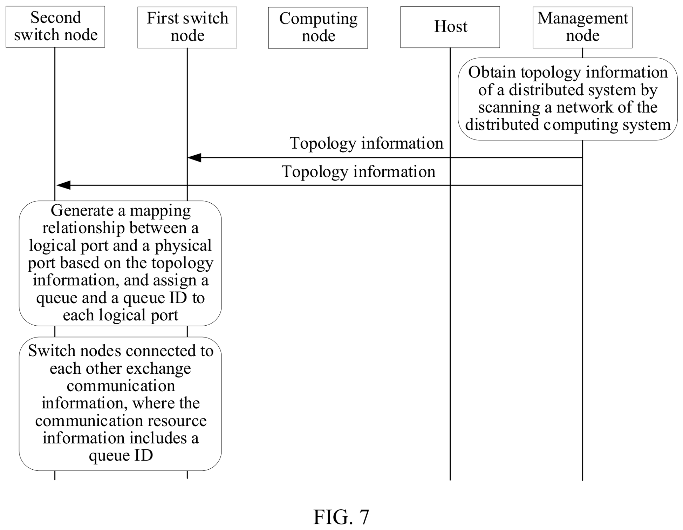

In embodiments of this application, before S501, the method further includes network initialization of the distributed computing system. For example, before the distributed computing system is used for the first time to execute a service, network initialization of the distributed computing system needs to be performed. FIG. 7 is a diagram of network initialization according to an embodiment of this application. The management node can obtain the topology information of the distributed system by scanning a network of the distributed computing system, and then complete route configuration of the network in the distributed computing system based on the topology information. The topology information includes a connection relationship between each computing node and each first switch node in the distributed system. If the distributed computing system includes a plurality of layers of switch nodes, for example, in FIG. 3, the distributed computing system includes two layers of switch nodes, the topology information further includes connection relationships between switch nodes in two adjacent layers of switch nodes. For example, if one second switch node is connected to a plurality of first switch nodes via a plurality of ports, the topology information includes a corresponding connection relationship between a port of the second switch node and the first switch node.

After scanning the network to obtain the topology information, the management node sends the topology information to each switch node. After each switch node receives the topology information, initial configuration of each switch node is completed. For example, as shown in FIG. 7, when the distributed computing system includes a plurality of layers of switch nodes, each switch node generates a mapping relationship between a logical port and a physical port based on the topology information, and assigns a queue and a queue ID to each logical port. One logical port includes one or more physical ports, and a physical port included in one logical port is connected to one switch node at an adjacent layer. After the switch node completes initial configuration, the switch nodes connected to each other exchange communication resource information, where the communication resource information includes a queue ID used for indicating a queue ID used when one switch node communicates with another switch node. For example, in FIG. 3, a second switch node sends, to a first switch node, a queue ID used when the second switch node communicates with the first switch node, and the first switch node also sends, to the second switch node, a queue ID used when the first switch node communicates with the second switch node. It should be noted that the management node may be a management device different from the computing device to which the host belongs, or the management node may be a software module deployed on the computing device to which the host belongs. This is not specifically limited in embodiments of this application.

S502. The host generates first control information corresponding to each computing node.

In the foregoing S501, the communication operator is divided into the N communication jobs, and executing the operation of the communication operator is converted into executing the N communication jobs. Each communication job corresponds to that one first switch node obtains a part of data from one computing node. Therefore, when the computing node executes the communication operator, the computing node needs to send the first control information to the connected first switch node, so that the first switch node that receives the first control information obtains data from the computing node that sends the first control information.

In embodiments of this application, after dividing each communication operator into N communication jobs, the host generates corresponding first control information for each communication job. The first control information includes a communication job ID used for uniquely identifying a communication job. It should be understood that each communication operator executed by each computing node is converted into N communication jobs, and an objective of each communication job is to enable the first switch node that receives the first control information to obtain data from the computing node that sends the first control information and perform data aggregation. Therefore, data obtained by one first switch node based on first control information sent by different computing nodes should be aggregatable. In embodiments of this application, communication job IDs in a plurality of pieces of first control information used for one first switch node to obtain aggregation data from a plurality of computing nodes are the same, and the aggregation data is data that is obtained by one first switch node from different computing nodes and on which data aggregation can be performed. For example, in FIG. 4, A0, A1, A2, and A3 are aggregation data, and communication job IDs in four pieces of first control information used for S0 to obtain A0, Al, A2, and A3 are the same.

S503. The host delivers job information corresponding to the to-be-executed service to each computing node.

After converting, by using the method in S501 and S502, the to-be-executed service into the computing operator and the communication operator that need to be executed by each computing node, and generating communication jobs corresponding to each communication operator and first control information corresponding to each communication job, the host obtains the job information corresponding to the to-be-executed service. The job information includes the operator information and the first control information. Then, the host sends the generated operator information and the first control information corresponding to each communication job to a corresponding computing node.

S504. Each computing node sends the first control information to a connected first switch node.

Any computing node, for example, a first computing node, in the distributed computing system is used as an example. The first computing node is connected to N first switch nodes. When executing a communication operator, the first computing node separately sends the first control information to the N first switch nodes connected to the first computing node. For example, in FIG. 4, the computing node C0 separately sends the first control information to the first switch nodes S0, S1, and S2; and the computing node C1 separately sends the first control information to the first switch nodes S0, S1, and S2.

S505. The first switch node sends a data read request to a computing node connected to the first switch node.

In embodiments of this application, the first control information further includes address information, and the address information includes an address of data that needs to be communicated in a communication job. In other words, the address information indicates a location of data read by the first switch node from the computing node that sends the first control information. After receiving first control information sent by one computing node, the first switch node generates one or more data read requests based on address information in the first control information. When a plurality of data read requests are generated, each data read request is used for reading a part of data read as indicated by the first control information. Then, the one or more data read requests are sent to a corresponding computing node, and corresponding data is read from the computing node. For example, in FIG. 2, the first control information sent by C1 to S0 includes a start address and a data length of the data A1. S0 generates one or more data read requests based on the start address, the data length, and a maximum payload size (Maximum Payload Size, MPS) of A1. For example, if the data length of the data A1 is 1000 bytes, and the MPS is 125 bytes, S0 generates eight data read requests, and data read based on each data read request is only a part of the data A1. Each data read request includes a start address and a read length used for reading a segment of data of the read length starting from the start address. It should be noted that the first switch node may alternatively generate one or more data read requests based on a start address, a data length, and a maximum read request size (Maximum Read Request Size, MRRS). This is not specifically limited in embodiments of this application. The first switch node needs to generate one or more read requests based on the first control information sent by each computing node. To be specific, the one or more read requests generated based on the first control information sent by one computing node are used to obtain, from the computing node, data read as indicated by the first control information. When a plurality of data read requests need to be generated, one data read request can be used to read only a part of the data read as indicated by the first control information.

In a possible implementation, the first control information further includes computing node information, and the computing node information indicates a quantity of computing nodes connected to each first switch node. Before sending the data read request, each first switch node further needs to determine, based on the computing node information, whether first control information sent by all computing nodes connected to the first switch node is received. The first switch node generates the one or more data read requests only when receiving the first control information sent by all the computing nodes connected to the first switch node. For example, after receiving the first control information whose communication job ID is 01, the first switch node determines, based on the computing node information in the first control information, that the first switch node is connected to four computing nodes. After receiving the four pieces of first control information that carries a communication identity 01, the first switch node determines that the first control information sent by all the computing nodes connected to the first switch node is received. Because a storage resource of the switch node is limited, the first switch node sends the data read request to the computing node only after determining that the control information of all the computing nodes connected to the first switch node is received. This can avoid a problem that data that is read first is buffered for a long time because the first switch node reads the data when receiving one piece of first control information. It should be understood that the computing node information actually indicates a quantity of computing nodes that are connected to each first switch node and that are configured to execute a current to-be-executed service. In this application, an example in which all computing nodes in the distributed computing device participate in service execution is used. Therefore, the quantity of computing nodes that are connected to each first switch node and that are configured to execute the current to-be-executed service is the same as a quantity of all computing nodes connected to the first switch node.

Optionally, the computing node information may be a value. To be specific, a value directly indicates a quantity of computing nodes connected to each first switch node. The computing node information may alternatively be in another form. For example, the computing node information includes k bits, where k is a quantity of ports included in the first switch node, and each bit corresponds to one port of the first switch node. When one port is connected to one computing node, a bit corresponding to the port is set to 1, and remaining bits are set to 0. In this case, after receiving the first control information, the first switch node can determine, based on a quantity of bits that are set to 1 in the computing node information, a quantity of computing nodes connected to the first switch node, that is, the quantity of computing nodes that participate in executing the to-be-executed service.

The first switch node can alternatively determine, in another manner, whether the first control information sent by all computing nodes connected to the first switch node is received. This is not specifically limited in embodiments of this application. For example, the computing node information includes k bits, where k is a quantity of ports included in the first switch node, and each bit corresponds to one port of the first switch node. When one port is connected to one computing node, a bit corresponding to the port is set to 1, and remaining bits are set to 0. In this case, after receiving one piece of first control information, the first switch node can determine, based on bits set to 1, ports from which first control information needs to be received. After the first switch node receives the first control information from these ports, the first switch node determines that the first control information sent by all computing nodes connected to the first switch node is received.

In embodiments of this application, when the distributed computing system can simultaneously execute a plurality of services, after receiving first control information sent by any computing node, the first switch node needs to first determine, based on the first control information, whether a computing resource of the first switch node is available. The first switch node sends the data read request to the computing node connected to the first switch node only when the first switch node determines that the computing resource of the first switch node is available. For example, each first switch node is configured to support three concurrent requests at the same time. If a first switch node S0 has processed three concurrent requests when receiving first control information, and it is determined, based on a communication job ID, that the first control information corresponds to a new concurrent request, S0 determines that a computing resource of S0 is unavailable, and returns information indicating that a resource is insufficient to a computing node. If S0 simultaneously processes two concurrent requests when receiving first control information, and S0 determines that a computing resource of S0 is available, S0 sends a data read request to a computing node connected to S0.

It should be noted that after receiving first control information sent by one computing node, the first switch node may determine whether the computing resource of the first switch node is available. When determining that a computing resource of a first switch node is unavailable, the first switch node needs to return information indicating that a resource is insufficient to a computing node, only after receiving first control information sent by all computing nodes connected to the first switch node. This avoids a case in which when receiving first control information sent by a 1^{st} computing node, a first switch node determines that a computing resource of the first switch node is unavailable, and after receiving first control information sent by a remaining computing node, determines that a computing resource of the first switch node is available.

S506. Each computing node obtains corresponding data based on the received data read request, and sends the obtained data to the first switch node.

After receiving the data read request, each computing node obtains corresponding data based on the start address and the read length in each data read request, and sends the data to the corresponding first switch node.

S507. The first switch node obtains a data computation result through computation based on the data obtained from each computing node, and sends the data computation result to the computing node connected to the first switch node.

After obtaining the data from each computing node based on the one or more data read requests, the first switch node aggregates the obtained data, and then sends aggregated data to each computing node. For example, the first switch node can read, based on a data read request, data read as indicated by the first control information. For example, the first switch node obtains data A0 from C0, obtains data A1 from C1, obtains data A2 from C2, and obtains data A3 from C3, then performs computation on the data A0, A1, A2, and A3 to obtain a data computation result, and sends the data computation result to four computing nodes separately. For example, the communication job is Allreduce. In this case, the first switch node performs summation on A0, A1, A2, and A3, and then sends a summation result to the four computing nodes. The first switch node may perform summation after obtaining two pieces of data returned by computing nodes, or may perform summation after obtaining all the four pieces of data. This is not specifically limited in embodiments of this application.

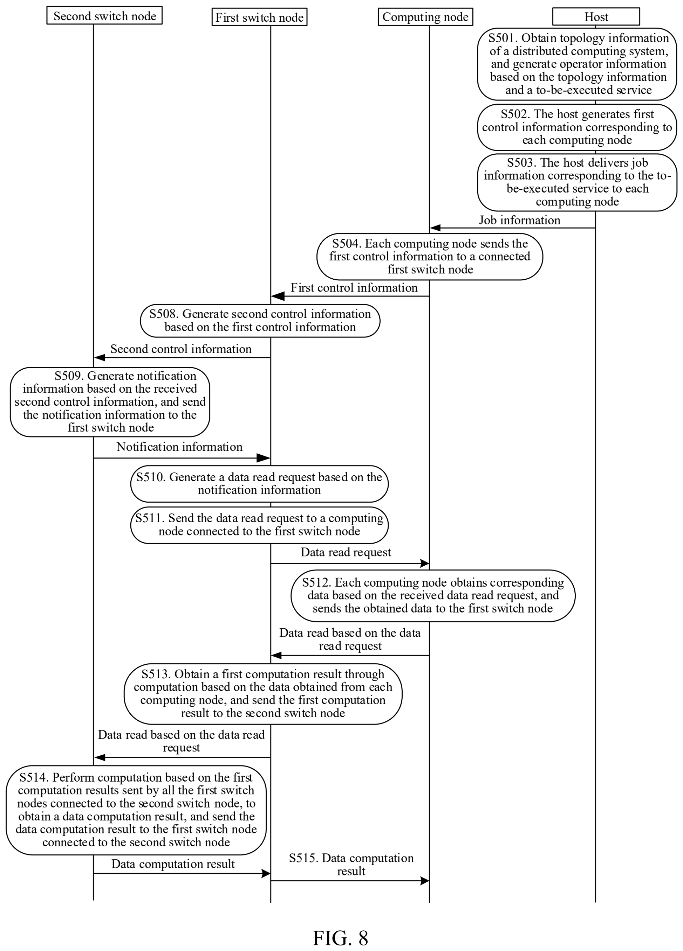

With reference to FIG. 2, the foregoing describes the data processing method in a case in which the distributed computing system includes one layer of switch nodes. The data processing method provided in this application can be further applied to a distributed computing system including a plurality of layers of switch nodes. For example, the method is applied to the distributed computing system that includes two layers of switch nodes and that is shown in FIG. 3. The distributed computing system includes a host, a plurality of computing nodes, at least one layer-1 switch node, and at least one layer-2 switch node. When the distributed computing system includes the at least one second switch node, the data read by the first switch node based on the data read request further needs to be sent to the second switch node connected to the first switch node for processing. FIG. 8 is a diagram of another data processing method according to an embodiment of this application. When the distributed computing system includes two layers of switch nodes, for operations performed by the host and the computing node in the distributed computing system, refer to the foregoing S501 to S504. After each computing node sends the first control information to the connected first switch node, the following S508 to S515 are further included.

S508. The first switch node generates second control information based on the first control information.

After determining, based on the computing node information, that the first control information sent by all the computing nodes connected to the first switch node is received, the first switch node further needs to generate the second control information based on the first control information, and send the second control information to the second switch node. The second control information includes the communication job ID in the first control information.

S509. The second switch node generates notification information based on the received second control information, and sends the notification information to the first switch node.

The notification information includes the communication job ID, so that the first switch node that receives the notification information determines the corresponding first control information and the address information and the data length in the first control information based on the communication job ID, and then generates the one or more data read requests.

In a possible implementation, the second switch node sends the notification information to the first switch node only after determining that the second control information sent by all the first switch nodes connected to the second switch node is received. When the second switch node needs to determine whether the second control information sent by all the first switch nodes connected to the second switch node is received, the first control information further includes first switch node information, and the first switch node information indicates a quantity of first switch nodes connected to the second switch node. For a form of the first switch node information, refer to the computing node information in the first control information. Details are not described herein again.

In embodiments of this application, when the distributed computing system can simultaneously execute a plurality of services, after receiving second control information sent by any first switch node, the second switch node needs to first determine, based on the second control information, whether a computing resource of the first switch node is available. The second switch node sends the notification information to the first switch node connected to the second switch node only when the second switch node determines that the computing resource of the second switch node is available. For a method for determining, by the second switch node, whether the computing resource of the second switch node is available, refer to the foregoing method for determining, by the first switch node, whether the resource of the first switch node is available. Details are not described herein again. Because a storage resource of the switch node is limited, the second switch node sends the notification information to the first switch node only after determining that the first control information of all the first switch nodes connected to the second switch node is received. This can avoid a problem that the storage resource is occupied because the second switch node notifies, when receiving one piece of second control information, the first switch node to read the data, causing the data that is read first to be buffered for a long time.

It should be noted that after receiving second control information sent by one first switch node, the second switch node may determine whether the computing resource of the second switch node is available. When determining that a computing resource of a second switch node is unavailable, the second switch node needs to return information indicating that a resource is insufficient to a first switch node only after receiving second control information sent by all first switch nodes connected to the second switch node. This avoids a case in which when receiving second control information sent by the 1^{st} switch node, a second switch node determines that a computing resource of the second switch node is unavailable, and after receiving second control information sent by a remaining first switch node, determines that the computing resource of the second switch node is available.

S510. The first switch node generates the data read request based on the notification information, and the first switch node sends the data read request to the computing node connected to the first switch node.

The notification information includes the communication job ID, so that the first switch node that receives the notification information determines the corresponding first control information and the address information and the data length in the first control information based on the communication job ID, and then generates the one or more data read requests. For a method for generating the data read request by the first switch node, refer to S505.

In a possible implementation, the notification information includes the communication job ID, an offset, and a first data length. The first data length indicates a length of data that is read by the first switch node this time. The first switch node that receives the notification information determines the corresponding first control information based on the communication job ID. The first switch node determines, based on address information in one piece of first control information, a start address of data that needs to be read, determines, based on the start address and an offset, a start address of the data to be read this time, and then generates a data read request based on the start address of the data to be read this time and the first data length. It should be understood that the first switch node needs to read data from a plurality of computing nodes connected to the first switch node. Therefore, each time receiving the notification information, the first switch node generates a data read request based on the received notification information and first control information sent by each computing node connected to the first switch node, and then sends the data read to the corresponding computing node. It should be understood that the notification information is equivalent to a read request sent by the second switch node to the first switch node, and is used for reading data of the first data length from the first switch node each time. The second switch node actively reads data from the first switch node, to avoid a problem of congestion on the second switch node that may be caused by sending data to the second switch node by the first switch node.

For example, in FIG. 3, S0 needs to read data from C0, C1, C2, and C3, and S0 generates, based on the notification information and the first control information sent by C0, a data read request corresponding to C0, to read data from C0; S0 generates, based on the notification information and the first control information sent by C1, a data read request corresponding to C1, to read data from C1; S0 generates, based on the notification information and the first control information sent by C2, a data read request corresponding to C2, to read data from C2; and S0 generates, based on the notification information and the first control information sent by C3, a data read request corresponding to C3, to read data from C3. It should be understood that one piece of notification information is used for reading a part of data that needs to be read from the computing node, and the second switch node sends a plurality of pieces of notification information to the first switch node, to read the whole data that needs to be read from the computing node.

When the distributed computing system includes the at least one second switch node, the data read by the first switch node based on the data read request further needs to be sent to the second switch node connected to the first switch node for processing. Therefore, the first switch node further needs to send the second control information obtained based on the first control information to the second switch node. After the second switch node sends the notification information to the first switch node, it indicates that the first switch node and the second switch node can process the data, and then the first switch node obtains the data from the computing node, avoiding a problem that when a resource of the second switch node is unavailable, after the first switch node reads the data, the second switch node cannot process the data, resulting in a waste of bandwidth or a computation error.

S511. The first switch node sends a data read request to a computing node connected to the first switch node.

S512. Each computing node obtains corresponding data based on the received data read request, and sends the obtained data to the first switch node.

After receiving the data read request, each computing node obtains corresponding data based on the start address and the read length in each data read request, and sends the data to the corresponding first switch node.

S513. The first switch node obtains a first computation result through computation based on the data obtained from each computing node, and sends the first computation result to the second switch node.

After obtaining the data from each computing node, the first switch node performs corresponding computation to obtain the first computation result, and then sends the first computation result to the second switch node.

S514. The second switch node performs computation based on the first computation results sent by all the first switch nodes connected to the second switch node, to obtain a data computation result, and sends the data computation result to the first switch node connected to the second switch node.

S515. The first switch node sends the data computation result to the computing node connected to the first switch node.

The first switch node generates the one or more data read requests based on the notification information, and obtains, from the computing node, the data read as indicated by the first control information. After obtaining data read based on a data read request, a first switch node performs computation on data read from different computing nodes connected to the first switch node, to obtain a first computation result, and then sends the first computation result to a second switch node that sends notification information to the first switch node. The second switch node performs computation based on the first computation results sent by all the first switch nodes connected to the second switch node, to obtain a data computation result, and sends the data computation result to the first switch node connected to the second switch node. Then the first switch node sends the data computation result to the computing node connected to the first switch node. For example, S0 obtains data A0 from C0, obtains data A1 from C1, obtains data A2 from C2, and obtains data A3 from C3, and then performs computation on the data A0, A1, A2, and A3 to obtain an intermediate computation result A0123. S1 obtains data A4 from C4, obtains data A5 from C5, obtains data A6 from C6, obtains data A7 from C7, then performs computation on the data A4, A5, A6, and A7 to obtain an intermediate computation result A4567, and sends the two intermediate computation results to S6. S6 performs computation on the two intermediate computation results to obtain the foregoing data computation result.

Because a computing resource, a storage resource, and the like of a switch node are limited, in a distributed computing node including a plurality of layers of switch nodes, each layer of switch node performs a corresponding computing operation based on obtained data, so that aggregation computation for a large amount of data can be implemented by using a plurality of switch nodes, thereby improving efficiency of implementing data aggregation in the distributed computing system.

In a possible implementation, one first switch node and one second switch node can be connected via one or more physical ports. When one first switch node and one second switch node are connected via a plurality of physical ports, if a communication protocol between the two switch nodes supports implementation of multipath load balancing, the communication protocol implements load balancing during data transmission. If a communication protocol between the two switch nodes does not support implementation of multipath load balancing, the switch node implements multipath load balancing, for example, sends data via different physical ports each time in a polling manner.

In a possible implementation, the first control information further includes a first address, and the first address is used for: after the first switch node or the second switch node completes performing data aggregation to obtain the data computation result, writing a flag bit to a location indicated by the first address, to notify the computing node that an operation corresponding to the communication operator has been completed, or notify, by sending a message, the computing node that an operation corresponding to the communication operator has been completed.

In a possible implementation, the first control information further includes a second address, and the second address is used for: after the first switch node and the second switch node determine that the computing resources of the first switch node and the second switch node are available, writing a flag bit to a location indicated by the address, to notify the computing node that the computing resources of the switch nodes are available, or notify, by sending a message, the computing node that an operation corresponding to the communication operator has been completed.

In the foregoing embodiments corresponding to FIG. 5 and FIG. 8, the first switch node performs a computing operation on data read from the plurality of computing nodes, and the second switch node performs a computing operation on data read from the plurality of first switch nodes. It should be understood that, in another application scenario, a switch node (including the first switch node and the second switch node) in a distributed computing system may not perform computation on obtained data, and the switch node is only configured to implement data synchronization between a plurality of computing nodes. According to the distributed computing system and the data processing method provided in this application, a quantity of times of sending data to each other by the plurality of computing nodes can be reduced, and data synchronization efficiency can be improved, thereby improving computing efficiency. In addition, the first switch node actively reads data from the plurality of computing nodes, so that congestion on the first switch node caused by active data sending by the computing node can be avoided. The second switch node actively reads data from the plurality of first switch nodes, so that congestion on the second switch node caused by active data sending by the plurality of first switch nodes can be avoided.

According to the distributed computing system and the data processing method provided in this application, in a process of performing distributed computing by the plurality of computing nodes, when collective communication needs to be performed, a computing node sends control information to a switch node, and the switch node that receives the control information actively obtains, from the computing node, data that needs to be aggregated, performs data aggregation in the switch node, and then sends an aggregation result to the computing node, to reduce an amount of data that needs to be communicated and a quantity of times of synchronization that is performed when the distributed computing system performs data aggregation through collective communication, thereby improving computing efficiency of distributed computing.

In addition, in the foregoing distributed computing process, the switch node sends a data read request only after the computing node sends the control information to the switch node. The switch node obtains the data that needs to be aggregated, performs data aggregation on the switch node, and after the data aggregation is completed, sends the result of the data aggregation to the node that sends the control information. Before and after the process, the switch node can be configured to process another job. In other words, an aggregation job triggered by the control information does not continuously occupy a computing resource of the switch node for a long time without releasing the computing resource. To be specific, for a service, the service occupies a resource of a switch node for data aggregation only when collective communication needs to be performed, and does not occupy the resource of the switch node in a process of performing the service by a computing node. Therefore, according to the data processing method provided in this application, when the distributed computing system performs a plurality of services, the resource of the switch node can be fully used.

For brief description, the foregoing method embodiments are all described as a combination of a series of actions. However, a person skilled in the art should understand that the present invention is not limited to the described action sequence. In addition, a person skilled in the art should also understand that all embodiments described in this specification are preferred embodiments, and the related actions are not necessarily mandatory to the present invention. Another appropriate step combination that a person skilled in the art can think of based on the content described above also falls within the protection scope of the present invention.

Embodiments of this application further provide a data processing system. The data processing system includes the distributed computing system shown in FIG. 2 or FIG. 3. For the distributed computing system, refer to the descriptions and related descriptions corresponding to FIG. 2 or FIG. 3. Details are not described herein again. For operations performed by a host, a computing node, and a switch node in the distributed computing system, refer to related descriptions in the foregoing embodiments corresponding to FIG. 4 to FIG. 8. Details are not described herein again.

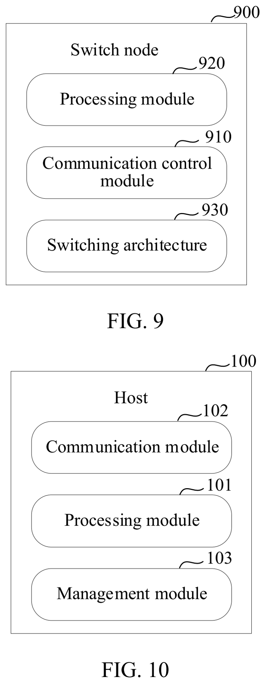

This application further provides a switch node. As shown in FIG. 9, the switch node 900 includes a communication control module 910, a processing module 920, and a switching architecture 930. The switch node is used in the distributed computing system shown in FIG. 2 or FIG. 3. The distributed computing system includes a plurality of computing nodes and at least one switch node 900. Each switch node 900 in the at least one switch node 900 is connected to at least one computing node in the plurality of computing nodes. The communication control module 910 is configured to receive first control information sent by at least one computing node connected to the switch node 900. The first control information includes a communication job identity ID, and the communication job ID indicates a communication job that the at least one computing node participates in. The processing module 920 is configured to generate a data read request based on the first control information. The communication control module 910 is further configured to send the data read request to the at least one computing node connected to the switch node 900. The processing module 920 is further configured to obtain a data computation result, where the data computation result is obtained based on data read based on the data read request. The communication control module 910 is further configured to send the data computation result to the at least one computing node connected to the first switch node.

In a possible implementation, the distributed computing system further includes a second switch node, and the second switch node is connected to the switch node 900. The processing module 920 is further configured to generate second control information based on the first control information, where the second control information includes the communication job ID. The communication control module 910 is further configured to send the second control information to the second switch node. The processing module 920 is specifically configured to: after receiving notification information sent by the second switch node, generate the data read request based on the first control information, where the notification information includes the communication job ID, and the notification information indicates the switch node 900 to obtain data from the at least one computing node connected to the switch node 900.

In a possible implementation, the processing module 920 is further configured to perform computation on the data read from the at least one computing node, to obtain a first computation result. The communication control module 910 is further configured to: send the first computation result to the second switch node, and receive the data computation result computed by the second switch node, where the data computation result is a computation result obtained by the second switch node based on the first computation result and a first computation result that is sent by another switch node in the at least one switch node 900.

In a possible implementation, the communication control module 910 and the processing module 920 are logic circuits in the switch node. An internal micro-architecture of the processing module 920 may be implemented as a ring-shaped architecture, a dual-ring architecture, a single central control architecture, or a plurality of distributed central unit architectures.

The switching architecture 930 is configured to implement data exchange between different ports of the switch node. For example, data received from the first port is sent out through the second port, and the data received from the first port is sent out through the second port.

For operations that can be implemented by the switch node 900, refer to the operations performed by the first switch node or the second switch node in the foregoing embodiments corresponding to FIG. 4 to FIG. 8. The communication control module 910 is configured to implement an operation such as receiving data or sending data performed by the first switch node or the second switch node, and the processing module 920 is configured to implement an operation other than the foregoing operation such as receiving data or sending data. Details are not described herein again.

Embodiments of this application further provide a host. FIG. 10 is a diagram of a host according to an embodiment of this application. The host 100 includes a processing module 101 and a communication module 102. The host 100 is used in the distributed computing system shown in FIG. 2 or FIG. 3. The distributed computing system includes the host 100, a plurality of computing nodes, and at least one first switch node. Each first switch node in the at least one first switch node is connected to at least one computing node in the plurality of computing nodes. The processing module 101 may be an AI training framework such as mindspore or tensorflow.

The processing module 101 is configured to: when the distributed computing system needs to process a to-be-executed service, obtain topology information of the distributed system for parsing, for example, determine, based on the topology information, a quantity of first switch nodes connected to each computing node. The topology information includes a connection relationship between each computing node and each first switch node in the distributed system. When the distributed computing system includes the at least one second switch node shown in FIG. 3, the topology information further includes a connection relationship between the at least one first switch node and the at least one second switch node.

The processing module 101 generates operator information based on the topology information of the distributed computing system and the to-be-executed service, where the operator information includes a computing operator and a communication operator. The processing module 101 is further configured to: convert the communication operator into a plurality of communication jobs based on the topology information, assign a communication job ID for each communication job, and generate, based on the communication job, first control information corresponding to each communication job. Specifically, for operations implemented by the processing module 101, refer to the operations implemented by the host in the foregoing embodiments corresponding to FIG. 5 to FIG. 8. Details are not described herein again.

The communication module 102 is configured to deliver job information to each computing node in the distributed computing system. The job information includes a computing operator and a communication operator that need to be executed by the computing node, a communication job corresponding to each communication operator, and first control information corresponding to each communication job.

In a possible implementation, the host 100 further includes a management module 103. The management module 103 is configured to: scan a network of the distributed computing system to obtain the topology information of the distributed system, and complete route configuration of the network in the distributed computing system based on the topology information.

The communication module 102 is further configured to send the topology information obtained by the management module 103 to each switch node, so that each switch node completes configuration, for example, generates a mapping relationship between a logical port and a physical port, and assigns a queue and a queue ID to each logical port.

For operations implemented by the management module 103, refer to the operations implemented by the management node in the foregoing embodiment shown in FIG. 5. Details are not described herein again.

Specifically, for operations implemented by the host 100, refer to the operations implemented by the host in the foregoing embodiments corresponding to FIG. 5 to FIG. 8. Details are not described herein again.

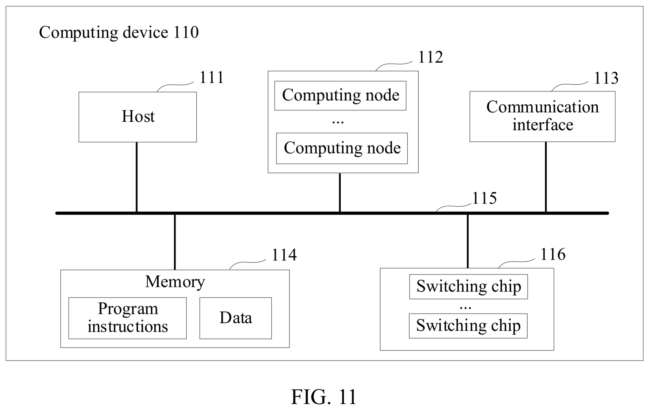

Embodiments of this application further provide a computing device. FIG. 11 is a diagram of a computing device according to an embodiment of this application. The computing device 110 includes a host 111, a plurality of computing nodes 112, a communication interface 113, and a memory 114. The host 111, the plurality of computing nodes 112, the communication interface 113, and the memory 114 are connected to each other via a bus 115.

The host 111 may be a CPU, and the computing node 112 is a GPU, an NPU, a TPU, or a dedicated AI processing chip. For operations performed by the host 111, refer to the operations performed by the host in the foregoing embodiments corresponding to FIG. 4 to FIG. 8. For operations performed by the computing node 112, refer to the operations performed by the computing node in the foregoing embodiments corresponding to FIG. 4 to FIG. 8. Details are not described herein again.

The communication interface 113 may be a wired interface or a wireless interface, and is configured to communicate with another module or device. The wired interface may be an Ethernet interface, a local interconnect network (local interconnect network, LIN), or the like, and the wireless interface may be a cellular network interface, a wireless local area network interface, or the like.

The memory 114 may be a non-volatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The memory 114 may alternatively be a volatile memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

The memory 114 may also be configured to store program instructions and data, so that the host 111 invokes the program instructions stored in the memory 114 to perform the operation steps of the host in the foregoing method embodiments. In addition, the computing device 110 may include more or fewer components than those shown in FIG. 5, or may have different component configuration manners.

The bus 115 may be a peripheral component interconnect (peripheral component interconnect, PCI) bus, an extended industry standard architecture (extended industry standard architecture, EISA) bus, or the like. The bus 115 may include an address bus, a data bus, a control bus, or the like. For ease of representation, only one bold line is used for representation in FIG. 11, but this does not mean that there is only one bus or only one type of bus.

The computing device 110 may further include the at least one switching chip 116. For operations performed by the switching chip 116, refer to the operations performed by the first switch node or the second switch node in the foregoing embodiments. Details are not described herein again.

Specifically, for specific implementation of performing various operations by the computing device 110, refer to specific operations performed by the distributed computing system in the foregoing method embodiments. Details are not described herein again.

Embodiments of this application further provide a computer-readable storage medium. The computer-readable storage medium stores instructions. When the instructions are run on a processor, the method steps implemented by the evaluation device in the foregoing method embodiments may be implemented. For a specific implementation of the processor of the computer-readable storage medium in performing the foregoing method steps, refer to the specific operations of the foregoing method embodiments. Details are not described herein again.

Embodiments of this application further provide a computer-readable storage medium. The computer-readable storage medium stores instructions. When the instructions are run on a processor, the method steps implemented by the management device in the foregoing method embodiments may be implemented. For a specific implementation of the processor of the computer-readable storage medium in performing the foregoing method steps, refer to the specific operations of the foregoing method embodiments. Details are not described herein again.

In the foregoing embodiments, the descriptions of each embodiment have respective focuses. For a part that is not described in detail in an embodiment, reference may be made to related descriptions in other embodiments.

All or some of the foregoing embodiments may be implemented using software, hardware, firmware, or any combination thereof. When software is used to implement embodiments, the foregoing embodiments may be implemented fully or partially in the form of a computer program product. The computer program product includes one or more computer instructions. When the computer program instructions are loaded and executed on a computer, all or some of the procedures or functions according to embodiments of the present invention are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium, or a semiconductor medium. The semiconductor medium may be a solid-state drive.

Steps in the methods in embodiments of this application may be sequentially scheduled, combined, or deleted based on an actual requirement. Modules in the apparatus in embodiments of this application may be divided, combined, or deleted based on an actual requirement.

Embodiments of this application are described above in detail. Although the principles and implementations of this application are described by using specific examples in this specification, the descriptions about the foregoing embodiments are merely provided for ease of understanding of the method and core ideas of this application. In addition, person of ordinary skill in the art can make variations to this application in terms of the specific implementations and application scopes based on the ideas of this application. Therefore, the content of the specification shall not be construed as a limit to this application.

The foregoing embodiments are merely intended for describing the technical solutions of the present invention, but not for limiting the present invention. Although the present invention is described in detail with reference to the foregoing embodiments, a person of ordinary skill in the art should understand that modifications may still be made to the technical solutions recorded in the foregoing embodiments, or equivalent replacements may be made to the part of the technical features; and these modifications or replacements will not cause the essence of corresponding technical solutions to depart from the protection scope of the technical solutions in embodiments of the present invention.

## Claims

1. A data processing method, applied to a distributed computing system, wherein the distributed computing system comprises a plurality of computing nodes and at least one first switch node, and each first switch node in the at least one first switch node is connected to at least one computing node in the plurality of computing nodes, and the method comprises:
receiving, by a first switch node, first control information of at least one computing node connected to the first switch node, wherein the first control information comprises a communication job identity ID, and the communication job ID indicates a communication job that the at least one computing node participates in;
sending, by the first switch node, a data read request to the at least one computing node based on the first control information;
obtaining, by the first switch node, a data computation result, wherein the data computation result is obtained based on data read based on the data read request; and
sending, by the first switch node, the data computation result to the at least one computing node.

2. The method according to claim 1, wherein the distributed computing system further comprises a second switch node, and the second switch node is connected to the first switch node; and
the sending, by the first switch node, a data read request to the at least one computing node based on the first control information comprises:
sending, by the first switch node, second control information to the second switch node based on the first control information, wherein the second control information comprises the communication job ID; and
after receiving notification information sent by the second switch node, sending, by the first switch node, the data read request to the at least one computing node, wherein the notification information comprises the communication job ID, and the notification information indicates the first switch node to obtain data from the at least one computing node.

3. The method according to claim 2, wherein the obtaining, by the first switch node, a data computation result comprises:
performing, by the first switch node, computation on the data read from the at least one computing node, to obtain a first computation result;
sending, by the first switch node, the first computation result to the second switch node; and
obtaining, by the first switch node, the data computation result computed by the second switch node, wherein the data computation result is a collective computation result obtained by the second switch node based on the first computation result and a computation result that is sent by another switch node in the at least one first switch node.

4. The method according to any one of claims 1 to 3, wherein the communication job is Allreduce, and the data computation result is a summation result, an average result, or an extreme value result of the data obtained based on the data read request.

5. The method according to any one of claims 1 to 4, wherein the first control information further comprises address information, and the address information indicates a location of data read by the first switch node from the computing node that sends the first control information; and
the data read based on the data read request is a part or all of the data read as indicated by the first control information.

6. The method according to any one of claims 1 to 5, wherein the first control information further comprises computing node information, and the computing node information indicates a quantity of the at least one computing node; and
the sending, by the first switch node, a data read request to the at least one computing node based on the first control information comprises:
after determining, based on the computing node information, that the first control information of the at least one computing node is received, sending, by the first switch node, the data read request to the first quantity of computing nodes based on the first control information.

7. The method according to any one of claims 1 to 6, wherein the computing node is a graphics processing unit GPU, a neural network processing unit NPU, a tensor processing unit TPU, or a dedicated artificial intelligence AI processing chip, and the first switch node is a switching chip or a switching device having a switching function.

8. The method according to any one of claims 1 to 7, wherein the distributed computing system further comprises a host, and the method further comprises:
generating, by the host, operator information based on topology information of the distributed computing system and a to-be-executed service, wherein the operator information comprises a communication operator and a computing operator in the to-be-executed service.

9. The method according to claim 8, wherein the method further comprises:
determining, by the host based on the topology information, that a quantity of first switch nodes connected to each computing node is N, wherein N is a positive integer; and
dividing, by the host, the communication operator into N communication jobs, wherein each first switch node corresponds to one of the N communication jobs.

10. The method according to claim 8 or 9, wherein the host delivers the communication operator and the N communication jobs to the plurality of computing nodes.

11. A switch node, comprising a communication control module and a processing module, wherein the switch node is located in a distributed computing system, the distributed computing system comprises a plurality of computing nodes and at least one switch node, and the switch node is connected to at least one computing node in the plurality of computing nodes;
the communication control module is configured to receive first control information sent by at least one computing node connected to the switch node, wherein the first control information comprises a communication job identity ID, and the communication job ID indicates a communication job that the at least one computing node participates in;
the processing module is configured to generate a data read request based on the first control information;
the communication control module is further configured to send a data read request to the at least one computing node;
the processing module is further configured to obtain a data computation result, wherein the data computation result is obtained based on data read based on the data read request; and
the communication control module is further configured to send the data computation result to the at least one computing node.

12. The switch node according to claim 11, wherein the distributed computing system further comprises a second switch node, and the second switch node is connected to the switch node;
the processing module is further configured to generate second control information based on the first control information, wherein the second control information comprises the communication job ID;
the communication control module is further configured to send second control information to the second switch node; and
the processing module is specifically configured to: after receiving notification information sent by the second switch node, generate the data read request based on the first control information, wherein the notification information comprises the communication job ID, and the notification information indicates the switch node to obtain data from the at least one computing node.

13. The switch node according to claim 12, wherein:
the processing module is further configured to perform computation on the data read from the at least one computing node, to obtain a first computation result;
the communication control module is further configured to send the first computation result to the second switch node; and
the processing module is further configured to receive the data computation result computed by the second switch node, wherein the data computation result is a collective computation result obtained by the second switch node based on the first computation result and a computation result that is sent by another switch node in the distributed computing system.

14. The switch node according to any one of claims 11 to 13, wherein the communication job is Allreduce, and the data computation result is a summation result, an average result, or an extreme value result of the data obtained based on the data read request.

15. The switch node according to any one of claims 11 to 14, wherein the first control information further comprises address information, and the address information indicates a location of data read by the first switch node from the computing node that sends the first control information; and
the data read based on the data read request is a part or all of the data read as indicated by the first control information.

16. The switch node according to any one of claims 11 to 15, wherein the first control information further comprises computing node information, and the computing node information indicates a quantity of the at least one computing node; and
the processing module is further configured to generate the data read request after determining, based on the computing node information, that the first control information of the at least one computing node is received.

17. The switch node according to any one of claims 11 to 16, wherein the computing node is a graphics processing unit GPU, a neural network processing unit NPU, a tensor processing unit TPU, or a dedicated artificial intelligence AI processing chip, and the switch node is a switching chip or a switching device having a switching function.

18. The switch node according to any one of claims 11 to 17, wherein the communication control module and the processing module are logic circuits in the switching chip.

19. A distributed computing system, comprising a plurality of computing nodes and at least one first switch node, wherein each first switch node in the at least one first switch node is connected to at least one computing node in the plurality of computing nodes, each computing node is configured to send first control information to a first switch node connected to the computing node, and each first switch node is configured to perform the method according to claims 1 to 7.

20. The distributed computing system according to claim 19, further comprising a host, wherein the host is configured to perform the method according to claims 8 to 10.
